# EUROPEAN PATENT APPLICATION

(11) **EP 4 287 082 A1**
(43) Date of publication of application: **06.12.2023**
(21) Application number: 22177192.6
(22) Date of filing: 03.06.2022
(51) Int. Cl.: G06N 20/00, H04B 17/354

(54) **METHOD OF TRAINING AN ARTIFICIAL INTELLIGENCE MODULE, MONITORING METHOD AND SYSTEM FOR MONITORING A RADIO FREQUENCY ENVIRONMENT**

(71) Applicant: Rohde & Schwarz GmbH & Co. KG, 81671 München (DE)
(72) Inventor: Wong, KokMeng, 81671 München (DE); Green, PeterJohn, 81671 München (DE); Pay, WeeChong, 81671 München (DE); Durai, Rajashekar, 81671 München (DE); Lee, Cyril, 81671 München (DE)
(74) Representative: Prinz & Partner mbB

(57) **Abstract**

The invention relates to a computer-implemented method of training an artificial intelligence module. The method comprises the steps of:
- providing a training data set, the training data set encompassing training data of a frequency spectrum comprising a guard band and/or training data concerning a radio frequency power in the guard band, and
- feeding the training data set into the artificial intelligence module to be trained, which processes the training data set in order to learn a standard frequency spectrum and/or a standard radio frequency power in the guard band, thereby enabling the artificial intelligence module, when trained, to determine a deviation from the standard frequency spectrum and/or to determine a deviation from the standard radio frequency power in the guard band.

In addition, a monitoring method for identifying an anomaly in a radio frequency spectrum as well as a system for monitoring a radio frequency environment are described.

## Description

The invention generally relates to a method of training an artificial intelligence module, a monitoring method and a system for monitoring a radio frequency environment.

Nowadays, wireless communication is becoming more and more common. Therefore, industrial wireless standards have been implemented in order to define certain requirements for equipment involved in the wireless communication. The respective industrial standards inter alia relate to requirements concerning Adjacent Channel Leakage Ratio (ACLR) and Adjacent Channel Power Ratio (ACPR).

To comply with these requirements, guard bands are used between adjacent radio bands used for wireless communication. The guard bands relate to unused parts of the radio spectrum between the radio bands, thereby preventing interference of radio signals occupying the radio bands. Accordingly, the guard bands are used to separate two neighbored radio bands to ensure that both can be used simultaneously without running the risk that radio signals used in the neighbored radio bands interfere with each other.

However, transmitted radio signals may sometimes unintentionally spill over or leak to a guard band due to non-linearities in power amplifiers, non-ideal band pass filters or similar reasons. When the radio frequency spill over or leakage is significant enough, it may cause interference to the adjacent radio band.

In some cases, these undesirable radio frequency spill overs or leakages may result in communication disturbances. For example, the 5G C-band is separated from a radar altimeter band by a 202 MHz guard band. If the 5G signals (3.7 GHz to 3.98 GHz) spill over or leak into the guard band (3.98 GHz to 4.2 GHz), these 5G signals may interfere with altimeter signals (4.2 GHz to 4.4 GHz). This may disturb the altimeter signals used for altitude calculation.

It is an object to obtain information of an occurring or rather arising radio frequency spill over or leakage into a guard band, which may cause disturbances between adjacent radio bands used for communication purposes.

According to the invention, a computer-implemented method of training an artificial intelligence module is provided. The method comprises the steps of:
- Providing a training data set, the training data set encompassing training data of a frequency spectrum comprising a guard band and/or training data concerning a radio frequency (RF) power in the guard band, and
- Feeding the training data set into the artificial intelligence module to be trained that processes the training data set in order to learn a standard frequency spectrum and/or a standard radio frequency power in the guard band, thereby enabling the artificial intelligence module, when trained, to determine a deviation from the standard frequency spectrum and/or to determine a deviation from the standard radio frequency power in the guard band.

The main idea is to train the artificial intelligence module such that the artificial intelligence module learns characteristics of the standard frequency spectrum and/or the standard radio frequency power in the guard band. Once the artificial intelligence module has been trained appropriately, the artificial intelligence module is enabled to identify deviations from the standard frequency spectrum and/or the standard radio frequency power in the guard band once used in a real environment.

For training purposes, the artificial intelligence module may be deployed for an initial period, for instance one week, two weeks or even more weeks, in a certain radio frequency environment. During this initial period, the artificial intelligence module may receive radio frequency data obtained from the radio frequency environment so as to learn the standard frequency spectrum and/or the standard radio frequency power in the guard band.

Generally, the trained artificial intelligence module cannot only detect (radio frequency) spill over or leakage into the guard band of interest, but the trained artificial intelligence module can also detect undesired radio frequency signals in the respective guard band, which may be a potential threat to the adjacent radio band.

Generally, artificial intelligence (abbr.: Al) is the general category for computer code capable to learn when executed on a processing circuit, e.g. a computer. The artificial intelligence may be based on machine learning algorithms (abbr.: ML / MLA).

The artificial intelligence module may comprise a respective neural network, for instance a Convolutional Neural Network (abbr.: CNN). Alternatively, a feedforward neural network, a radial basis function network, a (Kohonen) self organizing network, a Recurrent Neural Network (abbr.: RNN), a Long Short Term Memory (LSTM) network, a modular neural network or similar AI networks may be used.

Feeding the training data set into the artificial intelligence module can be understood as transferring the respective data of the training data set into a temporary storage medium and/or a permanent storage medium of an evaluation unit, which can be accessed by a circuit implementing the artificial intelligence such that the artificial intelligence is enabled to handle the data according to the underlying algorithm, respectively.

A standard frequency spectrum relates to a frequency spectrum without any anomalies or rather disturbing effects such as radio frequency spill over or leakage into a guard band or any disturbing radio frequency signals in the guard band, e.g. interfering signals.

In a similar manner, a standard radio frequency power in the guard band can be a power level and/or a power distribution that can be determined from radio frequency data, for instance obtained from a frequency spectrum, without any anomalies or rather disturbing effects such as radio frequency spill over or leakage or any disturbing radio frequency signals in the guard band.

A respective deviation from the standard frequency spectrum and/or the standard radio frequency power can be caused by an anomaly or rather a disturbing effect such as a radio frequency spill over, a leakage and/or a disturbing radio frequency signal in the guard band, which results in the difference from the above-described standard. For instance, non-linearities in power amplifiers and/or non-ideal band pass filters may cause these deviations.

Since the artificial intelligence module has been trained to recognize the standard frequency spectrum and/or the standard radio frequency power in the guard band, the artificial intelligence module is enabled to identify any deviation from the respective standard.

Generally, the training phase may also encompass the step of processing the training data set by means of the artificial intelligence module to be trained, thereby outputting a prediction result, namely a predicted output indicating whether a deviation occurs/arises or not. Then, the prediction result obtained by the artificial intelligence module is assessed, e.g. manually or rather automatically, for instance based on labelled data provided by the training data set. The assessment obtained when assessing the prediction result may be fed back into the artificial intelligence module. Depending on the assessment, the artificial intelligence module may adapt settings, particularly weightings and/or model parameters, thereby learning relations and/or correlations during the training phase such that the artificial intelligence module gets trained.

The training data may relate to radio frequency data.

According to an aspect, the training data is indicative of the standard frequency spectrum and/or the standard radio frequency power in the guard band. In a simple embodiment, the artificial intelligence module is fed by the training data set comprising the training data, particularly over a long time. According to an embodiment, the training data set may only comprise the training data associated with the standard frequency spectrum and/or the standard radio frequency power in the guard band. Accordingly, the artificial intelligence module is solely trained with respect to the standard frequency spectrum and/or the standard radio frequency power in the guard band.

Another aspect provides that the training data set comprises anomaly data indicative of a (radio frequency) spill over or leakage into the guard band and/or unwanted radio frequency signals in the guard band, based on which the artificial intelligence module is trained to identify a deviation from the standard frequency spectrum and/or the standard radio frequency power in the guard band. According to another embodiment, the training data set may also comprise additional data that is associated with anomalies in the frequency spectrum and/or anomalies concerning the radio frequency power in the guard band, namely the anomaly data. The anomaly data explicitly generates deviations from the standard frequency spectrum and/or the standard radio frequency power in the guard band. Therefore, the artificial intelligence module is enabled to directly learn the respective characteristics of deviation(s) from the standard frequency spectrum and/or the standard radio frequency power in the guard band.

Furthermore, the artificial intelligence module may learn relationships among the individual data such that the trained artificial intelligence module is enabled to predict upcoming deviation(s).

The training data set may comprise labelled data. For instance, the labelled data comprises the training data labelled as relating to the standard frequency spectrum and/or the standard radio frequency power in the guard band. Furthermore, the labelled data comprises the anomaly data labelled as relating to deviation(s) from the standard frequency spectrum and/or the standard radio frequency power in the guard band. Accordingly, the artificial intelligence module may be learned by using the labelled data, e.g. the respective labels and the data associated therewith, namely the training data and/or the anomaly data. Thus, an automatic feedback can be established during the training phase of the artificial intelligence module.

The training duration can be reduced when using the training data set that comprises the training data indicative of the standard frequency spectrum and/or the standard radio frequency power in the guard band as well as the anomaly data that is indicative of deviation(s) from the standard frequency spectrum and/or the standard radio frequency power in the guard band.

Moreover, the training of the artificial intelligence module by means of such a training data set having anomaly data ensures that the trained artificial intelligence module is more robust.

According to a further aspect, the artificial intelligence module processes the training data set, thereby extracting at least one fingerprint data encompassed in the training data set. The at least one fingerprint data is used for determining the deviation from the standard frequency spectrum and/or determining the deviation from the standard radio frequency power in the guard band. The at least one fingerprint data relates to at least one parameter obtained from the training data set based on which it is verified whether a deviation occurs or not. The fingerprint data may relate to data of the frequency spectrum and/or radio frequency data associated with the radio frequency power in the guard band.

The at last one fingerprint data may relate to an adjacent channel leakage ratio, signal strength, occupied bandwidth, signal power, max hold power trigger, and/or traffic activity data. This respective data may be encompassed in the training data set.

Particularly, an arising (radio frequency) spill over or leakage into the guard band can be predicted by means of the (trained) artificial intelligence module that takes the at least one fingerprint data into account.

The artificial intelligence module may consider a time series of the at least one fingerprint data. Hence, a development of the values of the at least one fingerprint data is taken into account.

Generally, several different data of the training data set may be taken into consideration when determining whether a deviation is present or not or rather whether a deviation is arising or not. Particularly, uncorrelated data of the training data set is taken into account.

Particularly, both the training data indicative of the standard frequency spectrum and/or the standard radio frequency power in the guard band as well as the anomaly data indicative of deviation(s) from the standard frequency spectrum and/or the standard radio frequency power in the guard band each comprise respective data values, particularly for the above-mentioned types of data. Depending on the respective data values and/or relations of the different types of data among each other, the data belongs to either the anomaly data or the training data indicative of the standard frequency spectrum and/or the standard radio frequency power in the guard band.

Furthermore, the training data may be generated in a computer-aided manner and/or wherein the training data is collected by means of a radio receiver. For instance, the training data indicative of the standard frequency spectrum and/or the standard radio frequency power in the guard band may be gathered by using a radio receiver that is located in a radio frequency environment without any disturbing communication. Hence, the standard frequency spectrum and/or the standard (radio) frequency power in the guard band can be obtained easily, namely by recording the radio frequency spectrum and/or the radio frequency power.

However, the respective training data may also be generated by means of a computer, e.g. by simulating ideal conditions of a radio frequency environment.

Further, the anomaly data may also be generated in a computer-aided manner, thereby ensuring that defined anomalies, particularly specific anomalies, can be included into the training data set, thereby improving the training of the artificial intelligence module, namely reducing the time duration required and/or improving the robustness.

Alternatively, the anomaly data may be generated by a transmitter that transmits disturbing radio frequency signals which may use the guard band (at least partially). Hence, these disturbing radio frequency signals may cause interferences with radio signals in adjacent radio bands.

Moreover, at least one environmental parameter is also taken into account by the artificial intelligence module during the training phase, e.g. when processing the training data set, namely the training data and, optionally, the anomaly data. Hence, the artificial intelligence module is trained to learn relationships/correlations between different kinds of data, for instance the at least one environmental parameter as well as the training data and/or the anomaly data.

The at least one environmental parameter may relate to temperature, time, date, barometric pressure and/or other parameters providing information concerning the environment.

Once the artificial intelligence module is trained, the artificial intelligence module is enabled to predict any upcoming anomaly, e.g. radio frequency spill over or leakage into the guard band and/or unwanted radio frequency signals in the guard band, based on radio frequency data (and optionally at least one environmental parameter). The radio frequency data may relate to data of the frequency spectrum and/or data of the radio frequency power, wherein the radio frequency data may be obtained by processing radio frequency signal(s).

For instance, a time series of the at least one environmental parameter and/or a time series of the radio frequency data may be processed for predicting any upcoming anomaly.

The invention also provides a monitoring method for identifying an anomaly in a radio frequency spectrum. The monitoring method comprises the step of receiving at least one radio frequency signal by at least one receiver that processes the at least one radio frequency signal, thereby providing radio frequency data. The receiver may be a radio receiver. The radio frequency data is fed to at least one evaluation unit comprising a trained artificial intelligence module. Particularly, the artificial intelligence module was trained by the method described above. Hence, the trained artificial intelligence module receives the radio frequency data from the receiver. The radio frequency data is analyzed by the trained artificial intelligence module to identify a deviation from the standard frequency spectrum and/or a deviation from the standard radio frequency power in the guard band.

For instance, the frequency spectrum in the radio frequency data may be compared with a standard frequency spectrum in order to identify a deviation between the frequency spectrum in the radio frequency data from the standard frequency spectrum. Alternatively or additionally, a radio frequency power in the radio frequency data may be compared with a standard radio frequency power in the guard band in order to identify a deviation between the radio frequency power in the radio frequency data from the standard radio frequency power in the guard band. However, the respective deviation(s) may also be identified by analyzing other data encompassed in the radio frequency data than the frequency spectrum and/or the radio frequency power of the radio frequency data.

The invention further provides a system for monitoring a radio frequency environment. The system comprises at least one receiver configured to receive at least one radio frequency signal, wherein the at least one receiver is configured to process the at least one radio frequency signal, thereby obtaining radio frequency data. The system also has at least one evaluation unit comprising a trained artificial intelligence module, wherein the at least one evaluation unit is configured to evaluate the radio frequency data. Moreover, the trained artificial intelligence is configured and trained to identify a deviation from a standard frequency spectrum and/or a deviation from a standard radio frequency power in the guard band.

As mentioned above, the trained artificial intelligence module may compare the frequency spectrum in the radio frequency data with a standard frequency spectrum in order to identify a deviation between the frequency spectrum in the radio frequency data from the standard frequency spectrum. Alternatively or additionally, a radio frequency power in the radio frequency data may be compared with a standard radio frequency power in the guard band in order to identify a deviation between the radio frequency power in the radio frequency data from the standard radio frequency power in the guard band. In other words, a deviation between a frequency spectrum in the radio frequency data and the standard frequency spectrum may be identified. Alternatively or additionally, a deviation between a radio frequency power in the radio frequency data and a standard radio frequency power in the guard band may be identified. However, the respective deviation(s) may also be identified by analyzing other data encompassed in the radio frequency data than the frequency spectrum and/or the radio frequency power of the radio frequency data.

This generally allows the monitoring of at least one guard band either directly and/or indirectly. This improves the predictability of potential threats where (radio frequency) spill over and leakage into at least one guard band can be expected. Additionally or alternatively, it may be possible to determine the risk of interference over radio bands independently from direct guard band monitoring.

The at least one receiver provides the radio frequency data that may relate to data of the frequency spectrum and/or data concerning the radio frequency power in the guard band. The radio frequency data obtained when processing the at least one radio frequency signalis internally forwarded to the evaluation unit, particularly its trained artificial intelligence module, which processes the radio frequency data accordingly. The trained artificial intelligence module is enabled to determine occurring deviations and/or predict upcoming deviations from the standard frequency spectrum, e.g. the frequency spectrum without anomalies, and/or from the standard radio frequency power in the guard band.

The receiver may be connected at least one radio frequency antenna for receiving the radio frequency signal, particularly a global navigational satellite system (GNSS) antenna configured to capture a GNSS signal.

A global navigational satellite system (GNSS) can be any setup of satellites and their respective network of communication that allows the determination of geographical and/or space location independent of any respective system and/or entity where the geographical location shall be determined.

Moreover, several receivers may be provided that have a defined real-time bandwidth, for instance a real-time bandwidth of 100 MHz. The several receivers may be connected in series. Hence, three of such receivers together may cover a bandwidth up to 300 MHz.

Generally, the trained artificial intelligence module uses and handles the radio frequency data to make predictions based on respective underlying patterns in the radio frequency data. The analysis is done by the evaluation unit comprising the artificial intelligence module. Accordingly, the evaluation unit comprises a circuitry that is capable to run the trained artificial intelligence module.

The radio frequency data provided may not be the same data that was used previously for training the artificial intelligence module. Particularly, the at least one radio frequency signal is received by means of the receiver that scans the frequency spectrum, wherein the receiver processes the at least one radio frequency signal, thereby providing the radio frequency data.

In particular, the trained artificial intelligence module can be trained by the training method mentioned previously. This training can generally enable the trained artificial intelligence module to determine patterns otherwise hidden in the respective data processed, e.g. the radio frequency data. Therefore, the trained artificial intelligence module can be based on the same underlying algorithms, e.g. machine-learning (ML) algorithms, as it is defined with respect to the artificial intelligence module used during the training. In particular, the same artificial intelligence module is used as trained artificial intelligence module.

Nevertheless, the training of the artificial intelligence module and using the trained artificial intelligence module for analyzing respective data are two distinct methods. An artificial intelligence module is generally trained independently from its later use.

Data patterns can be patterns in the respective data processed where the accumulation of certain data/parameters, their co-appearance and/or absence of a certain value and/or falling below a certain threshold and/or exceeding a certain threshold is indicative of a certain condition. The pattern may indicate that a combination of given data values and/or thresholds and/or co-appearances and or absences may apply together, in particular as indicator for spill over and/or leakage of neighboring frequencies into the guard band frequency window.

The receiver and the evaluation unit may be commonly housed in a receiver device. Hence, the receiver device is enabled to identify the deviation.

An aspect provides that the trained artificial intelligence module processes the radio frequency data, thereby extracting at least one fingerprint data being encompassed in the radio frequency data. The at least one fingerprint data extracted is used for determining the deviation from the standard frequency spectrum and/or determining the deviation from the standard radio frequency power in the guard band, in particular wherein the trained artificial intelligence module compares the at least one fingerprint data extracted with corresponding fingerprint data trained. The at least one fingerprint data may be significant or rather indicative in order to determine the respective deviation from the standard. Accordingly, this data encompassed in the data processed, e.g. the radio frequency data, can be used for identifying the respective deviation. In other words, the at least one fingerprint data corresponds to a mark being indicative for a respective deviation.

In other words, the trained artificial intelligence module is enabled to extract the at least one fingerprint data from the radio frequency data obtained. Afterwards, the trained artificial intelligence module processes the at least one fingerprint data extracted in order to identify whether a deviation arises/takes place or not. For this purpose, the trained artificial intelligence module may compare the at least one fingerprint data with data learnt and/or apply a model obtained during the training phase, which inter alia depends on the at least one fingerprint data.

A further aspect provides that a notification is outputted, particularly by means of an output unit, in case the artificial intelligence module identifies a respective deviation from the standard frequency spectrum and/or the standard radio frequency power in the guard band. Thus, the method may comprise a step of providing a trigger signal, wherein the trigger signal may be such that it can be used to activate an alarm or notification in order to inform a user or an authority in a particular way, e.g. by an optical, sound or haptic signal. An optical signal may be a flashing light or a message on a screen. A sound signal may be a sound alarm or a buzzing. A haptic signal may be a vibration mode activation on a mobile device and/or a wearable. In other words, the method may comprise a step of activating an alarm or may comprise a step of informing a user in a particular way, e.g. by an optical, sound or haptic signal.

Another aspect provides that a direction finding takes place, thereby identifying the direction of a source of the radio frequency data. A direction finding unit may be provided by the system, which is used for direction finding. Hence, the method may use a direction finding unit that scans the radio frequency environment in order to capture a radio frequency signal, based on which the radio frequency data is provided.

The direction-finding unit can comprise at least one radio frequency antenna and at least one computing unit, wherein the at least one computing unit is capable to process data provided by the at least one radio frequency antenna in order to determine the direction of a respective source of the radio frequency signal received, particularly a disturbance. According to a specific embodiment, the respective radio frequency signal may be captured by two antennas associated with the direction finding unit, wherein a phase deviation is determined based on which the direction of the source of the radio frequency signal can be determined. Typically, both antennas may be separated from each other by half a wavelength. For instance, the radio frequency signal captured by the direction finding unit provokes the anomaly in the frequency spectrum and/or causes radio frequency power in the guard band. However, the direction-finding unit may also comprise more than two antennas. Generally, the more antennas, the better for electronic steering since resolution is improved, but costs increases. Nevertheless, the direction-finding unit may also comprise only one single antenna, e.g. a directional antenna. Particularly, the single antenna is mounted in a rotatable manner, e.g. by means of a mechanical coupling structure allowing a rotation of the single antenna.

Generally, the source can be located by means of the direction finding unit so as to stop transmission of disturbing radio frequency signals by the source.

At least one environmental parameter may be additionally captured by means of a sensor unit, wherein the environmental parameter is also taken into account by the evaluation unit when analyzing the radio frequency data. The environmental parameter may enrich the radio frequency data processed by means of the trained artificial intelligence module such that the trained artificial intelligence module analyzes the radio frequency data together with the at least one environmental parameter.

Particularly, the system is configured to perform the monitoring method described above. The respective characteristics and advantages also apply to the system in a similar manner and vice versa.

The receiver may continuously provide radio frequency data to the evaluation unit, thereby generating a data stream. This data stream can be analyzed by the respective trained artificial intelligence module to detect a radio frequency spill over or leakage into the guard band.

An aspect provides that the at least one receiver is configured to process the at least one radio frequency signal received, thereby obtaining in-phase and quadrature (I/Q) data. The in-phase and quadrature (I/Q) data may be further processed, particularly by means of a Fourier transform, in order to obtain the radio frequency data that is forwarded to the evaluation unit. For instance, a Fast Fourier transform (FFT) may be performed by means of a FFT module being part of the receiver. Accordingly, the radio frequency data is obtained by processing the at least one radio frequency signal, thereby obtaining I/Q data that is Fourier transformed so as to obtain the radio frequency data which is forwarded to the evaluation unit. The I/Q data can be data in a format that allows to separate a sine and a cosine components of the radio frequency data, thereby obtaining two independent components. The I/Q data can provide further insights into the respective radio frequency data. In any case, the radio frequency data may be obtained or rather derived from the I/Q data.

The I/Q data may be used to store a snapshot of the radio frequency environment, particularly for a detailed analysis when an anomaly is detected.

Hence, the at least one receiver is capable to record the I/Q data, particularly a few seconds before a radio frequency spill over or leakage and/or a few seconds after the detection of the radio frequency spill over or leakage. This allows to store, analyze and/or post-process the respective radio frequency data, namely the data stream.

Alternatively to the Fast Fourier Transform which creates a representation in the frequency domain, another transform may be used, e.g. a wavelet transform that creates a representation in the frequency domain and the time domain. However, several other transforms are also suitable.

Another aspect provides that a storage medium is provided that is configured to store the radio frequency data. Additionally, the I/Q data obtained may also be stored. The storage medium may be a hot swap storage medium, e.g. a storage medium that can be plugged into while the power remains switched on. The radio frequency data and/or the I/Q data can stored for a post-processing.

A signal analysis software may access the data stored in the storage medium, namely the radio frequency data or rather the I/Q data. The signal analysis software may post-process the I/Q data and/or the radio frequency data, thereby analyzing the respective data.

Alternatively or additionally, the I/Q data and/or the radio frequency data may be transferred via a communication link to a user or an authority for further processing.

According to a further aspect, the system comprises at least one amplifier configured to amplify the at least one radio frequency signal received and/or at least one signal classification unit configured to identify a signal baseline and/or an interfering signal.

The amplifier allows to amplify the radio frequency signals received to ensure that weak radio frequency signals can be processed accordingly. For instance, the performance of the system is improved due to the amplifier. The amplifier may be an implemented amplifier system, an integrated amplifier and/or a separate, independent amplifier that is connected to the at least one receiver. Furthermore, the system can comprise an amplifier such that the amplifier actively amplifies the incoming radio frequency signals.

The at least one signal classification unit improves the determination of signal classification. A respective baseline, namely the standard radio frequency spectrum, can be classified by means of the at least one signal classification unit. The at least one signal classification unit may also classify interfering radio signals. Particularly, the at least one signal classification unit is established by the trained artificial intelligence module.

During the training of the artificial intelligence module, a signal classification can be based on the respective multiplicity of data/parameters.

The respective classification provided by the at least one signal classification unit may also be forwarded to the user as additional information, particularly via a user interface, thereby informing the respective user about potential threats arising.

The radio frequency spillover and leakage into the guard band can happen either accidentally or intentionally, wherein the latter indicates a potential threat.

The pattern recognition and analysis may indicate that the leakage and/or spillover is intentional or that a respective signal is emitted directly in the guard band. This can be indicated by a respective classification.

According to an embodiment, a sensor unit is provided that is configured to additionally capture at least one environmental parameter, wherein the sensor unit is connected with the at least one evaluation unit such that the at least one evaluation unit is configured to take the environmental parameter also into account when analyzing the radio frequency data. The sensor unit may be capable of capturing environmental parameters such as temperature, time, date, barometric pressure and/or other parameters providing information concerning the environment. For this purpose, the sensor unit may comprise a camera, a thermometer, a barometer, a clock or similar components.

The radio frequency data may generally correspond to an accumulation of power bursts, a respective adjacent channel leakage ratio (ACLR) and/or a respective adjacent channel power ratio (ACPR), a radio frequency intensity and/or the respective radio frequency spectrum of the guard band and/or radio bands neighbored to the guard band.

The respective deviation(s) may be identified in case a certain value of the data processed, particularly a certain value of the at least one fingerprint data, is out of a predefined range and/or above or rather below a threshold, particularly a trained threshold.

The methods and the system allow to detect spill over or leakage into a guard band, thereby ensuring guard band protection. Further, it also allows to detect undesired radio frequency signals in the guard band which may be a potential threat to an adjacent radio frequency band. Therefore, the respective features characterizing either of these categories and/or embodiments within the respective category allow to characterize the respective other category and/or embodiment.

Generally, the radio frequency spectrum may relate to satellite communication, ISM radio bands (ISM - "industrial, scientific and medical"), frequency division duplex systems and similar applications, which use guard bands to separate adjacent radio bands.

The foregoing aspects and many of the attendant advantages of the claimed subject matter will become more readily appreciated as the same become better understood by reference to the following detailed description, when taken in conjunction with the accompanying drawings, wherein:
- Figure 1 schematically shows a system for monitoring a radio frequency environment according to the invention;
- Figure 2 schematically shows an overview illustrating a flow-chart of a monitoring method according to the invention;
- Figure 3 schematically shows an overview illustrating a flow-chart of a method of training an artificial intelligence module according to the invention; and
- Figure 4 schematically shows a receiver device according to an example that can be used by the system according the invention.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter of the precise forms disclosed.

For the purpose of the present disclosure, the phrase "at least one of A, B and C", for example, means (A), (B), (C), (A and B), (A and C), (B and C), or (A, B and C), including all further possible permutations when more than three elements are listed. In other words, the term "at least one of A and B" generally means "A and/or B", namely "A" alone, "B" alone or "A and B".

Therein and in the following, the terms "module" and "unit" are understood to describe suitable hardware, suitable software, or a combination of hardware and software that is configured to have a certain functionality.

The hardware may, inter alia, comprise a CPU, a GPU, an FPGA, an ASIC, or other types of electronic circuitry.

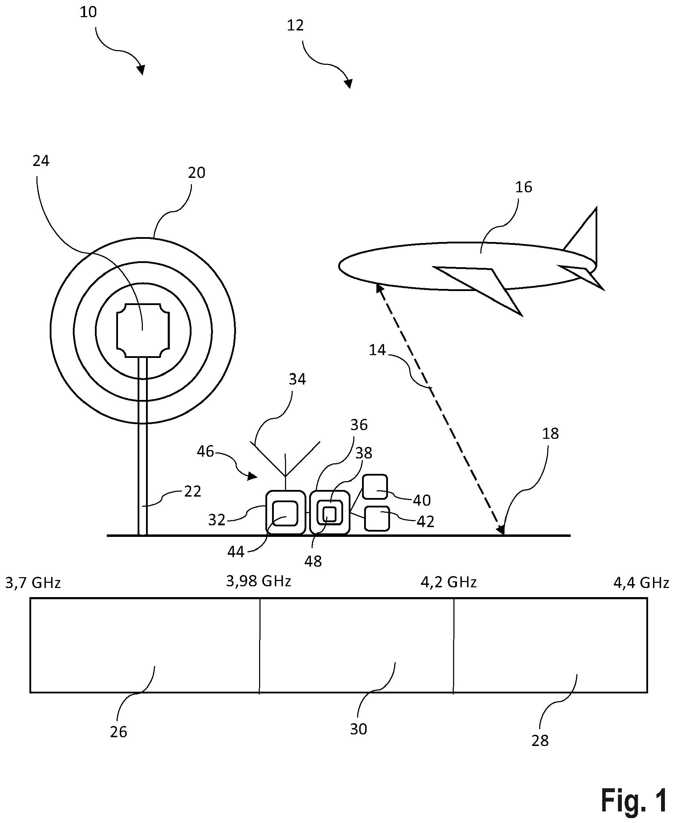

Figure 1 schematically shows a system 10 for monitoring a radio frequency environment 12, also called radio frequency spectrum.

In general, the radio frequency environment 12 may comprise radio frequency signals 14 exchanged, e.g. a plane 16 sending radio frequency signals 14 and receiving radio frequency signals reflected from ground 18 as indicated in Figure 1.

Furthermore, the radio frequency environment 12 may comprise radio frequency signals 20 emitted by a base station 22 having a respective transmitter 24.

The radio frequency signals 20 are transmitted in a 5G C-band 26 (3.7 GHz to 3.98 GHz) that is separated from a radar altimeter band 28 (4.2 GHz to 4.4 GHz) by a guard band 30 (3.98 GHz to 4.2 GHz) having a bandwidth of 202 MHz. The radar altimeter band 28 may be used by the plane 16 for calculating its altimeter.

In the shown embodiment, the plane 16 flies above ground 18 wherein the plane 16 continuously sends radio frequency signals towards the ground 18 and detects radio frequency signals reflected back from the ground 18, thereby establishing a radio frequency altimeter. The radio frequency signals used for the radio frequency altimeter are usually in the radar altimeter band mentioned above.

The base station 22 is associated with a 5G network using the radio frequency band associated with 3.7 GHz to 3.98 GHz. This radio frequency band is separated from the altimeter band by the respective guard band 30 as mentioned above, wherein the guard band is kept free from any signals and/or transmissions of the respective neighboring altimeter band and the neighboring 5G band. This shall ensure that no interferences between these adjacent radio bands occur.

However, sometimes effects like radio frequency spill over or leakage into the guard band 30 may take place which may cause interferences between adjacent radio bands.

For monitoring the radio frequency spectrum, particularly the guard band 30 and its neighbored radio bands, the system 10 is provided that is used to identify any of such effects as early as possible.

The system 10 comprises at least one receiver 32, e.g. a radio (frequency) receiver abbreviated by "RF Receiver", that is connected to at least one antenna 34 receiving radio frequency signals from the radio frequency environment 12 scanned. However, the system 10 may generally comprise more than one receiver which generally depends on the bandwidth to be monitored.

The at least one receiver 32 receives at least one radio frequency signal captured by the at least one antenna 34, wherein the receiver 32 processes the at least one radio frequency signal captured, thereby obtaining radio frequency data (abbreviated by "RF data"). The at least one receiver 32 is connected to an evaluation unit 36 that comprises a trained artificial intelligence module 38 (also abbreviated by "Al module"), which processes the radio frequency data.

The radio frequency data is fed to the evaluation unit 36, particularly the trained artificial intelligence module 38. Hence, the evaluation unit 36 receives the radio frequency data. The evaluation unit 36 evaluates the radio frequency data received, thereby analyzing the radio frequency data received in order to identify or rather predict any events relating to radio frequency spill over or leakage into the guard band 30. Moreover, interfering radio frequency signals in the guard band 30 can be detected during the analysis/evaluation performed by the evaluation unit 36.

Generally, the analysis/evaluation is performed by means of the trained artificial intelligence module 38 that runs on the evaluation unit 36, namely a respective processor.

The trained artificial intelligence module 38 is configured and trained to identify a deviation from a standard frequency spectrum and/or a deviation from a standard radio frequency power in the guard band 30 as will be described hereinafter in more detail.

Prior to forwarding the radio frequency data to the evaluation unit 36, the at least one receiver 32 may process the at least one radio frequency signal in order to gather in-phase and quadrature components (I/Q components) which may be processed further, e.g. by means of a Fourier transform, in order to obtain the radio frequency data that is forwarded to the evaluation unit 36, particularly the trained artificial intelligence module 38.

Hence, a pre-processing takes place prior to the analysis of the radio frequency data derived from the radio frequency signal(s).

In addition, the system 10 comprises a storage medium 40 that is connected to the evaluation unit 36 such that evaluation results and/or data inputted to the evaluation unit 36, namely the radio frequency data and/or the I/Q data, can be stored for further processing.

The evaluation unit 36 may also take environmental parameters into account when analyzing the radio frequency data. For this purpose, a sensor unit 42 is provided that captures at least one environmental parameter which is forwarded to the evaluation unit 36, particularly the trained artificial intelligence module 38.

Moreover, an amplifier 44 is provided that amplifies radio frequency signals received via the antenna 34.

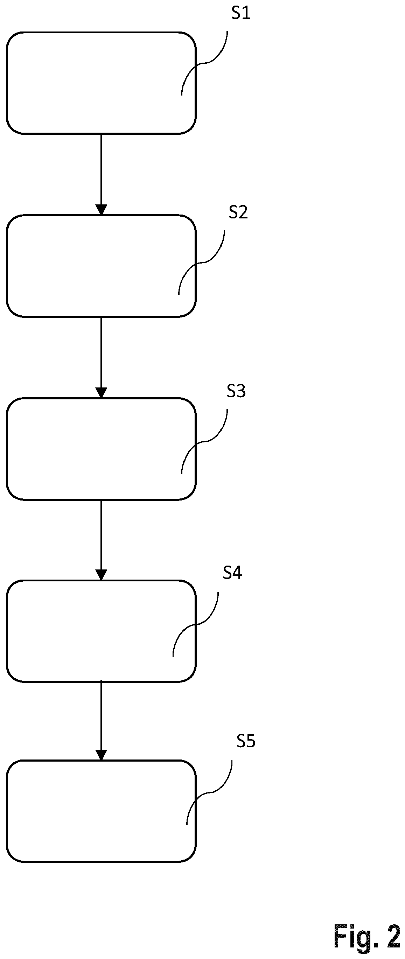

In Figure 2, respective steps are shown that represent steps done by the system 10 when monitoring the radio frequency environment 12 in order to identify an anomaly in the radio frequency environment 12, e.g. anomalies causing radio frequency spill over or leakage into the guard band 30 or rather any interfering radio signals.

In a first step S1, at least one radio frequency signal is received by the at least one receiver 32 of the system 10.

In an optional second step S2, the radio frequency signal is processed in order to obtain in-phase and quadrature (I/Q) data. The I/Q data may be further processed by means of a Fast Fourier transform (FFT) module, thereby obtaining the radio frequency data. In other words, the I/Q data may be processed in order to obtain the radio frequency data. Generally, another transform than a Fast Fourier Transform may be used, e.g. a wavelet transform.

In a third step S3, the radio frequency data is forwarded to the evaluation unit 36 for analyzing purposes. In addition, the I/Q data obtained may (also) be forwarded to the evaluation unit 36. In other words, the evaluation unit 36 having the trained artificial intelligence module 38 is fed by the respective data.

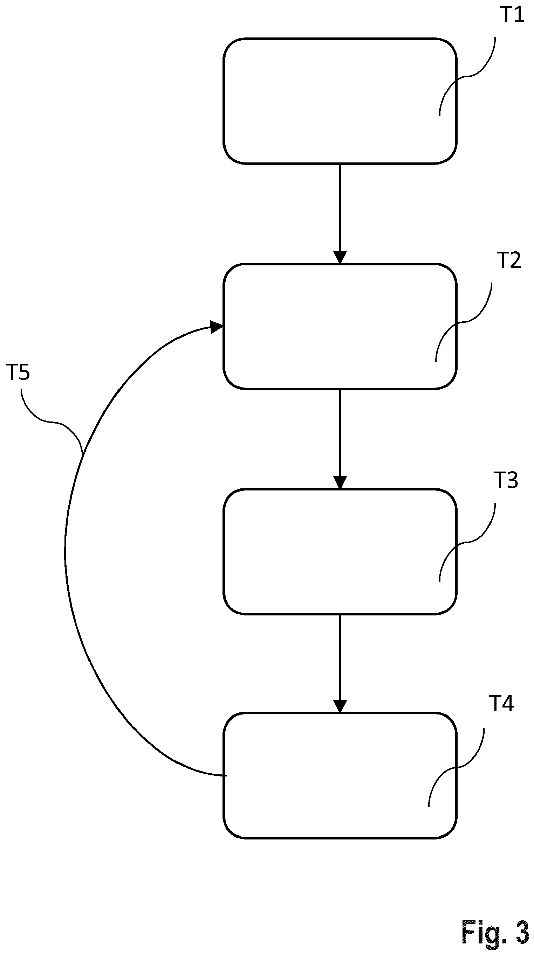

In a fourth step S4, the radio frequency data is analyzed by means of the trained artificial intelligence module 38 in order to identify a deviation from the standard frequency spectrum and/or a deviation from the standard radio frequency power in the guard band. The trained artificial intelligence module 38 was trained previously, for instance by means of a method shown in Figure 3, to identify deviation(s) form the standard frequency spectrum and/or the standard radio frequency power in the guard band 30.

The analyzing may be based on extracting at least one fingerprint data being encompassed in the radio frequency data. The at least one fingerprint data extracted is used for determining the respective deviation.

For instance, the fingerprint data may be considered together with at least one environmental parameter collected by the sensor unit 42.

In any case, the trained artificial intelligence module 38 may compare the at least one fingerprint data extracted with corresponding fingerprint data trained in order to evaluate whether a deviation occurs and/or arises in the radio frequency environment 12 monitored.

In a fifth step S5, a notification is outputted in case the trained artificial intelligence module 38 identifies a respective deviation, thereby notifying a user of the system 10 or an authority to initiate certain countermeasures to stop the reason for the occurring/arising deviation.

To facilitate the countermeasures, the system 10 may also comprise a direction finding unit 46 that can be used to identify the direction of a source of the radio frequency signal causing the deviation. Hence, the respective source may be located in order to stop transmission of the radio frequency signal that causes the deviation, e.g. the radio frequency signal spilling over into the guard band 30 or rather being an interfering signal already.

Furthermore, the system 10 also comprises a signal classification unit 48 configured to identify a signal baseline and/or an interfering signal. In fact, the signal classification unit 48 is part of the evaluation unit 36, which is enabled to classify the radio frequency data appropriately.

For instance, the signal classification unit 48 has been trained together with the trained artificial intelligence module 38. Hence, the trained artificial intelligence module 38 is enabled to predict occurring/upcoming deviations from the standard frequency spectrum and/or a the standard radio frequency power in the guard band 30 based on the radio frequency data, whereas the signal classification unit 48 is enabled to classify any radio frequency signals contained in the radio frequency data.

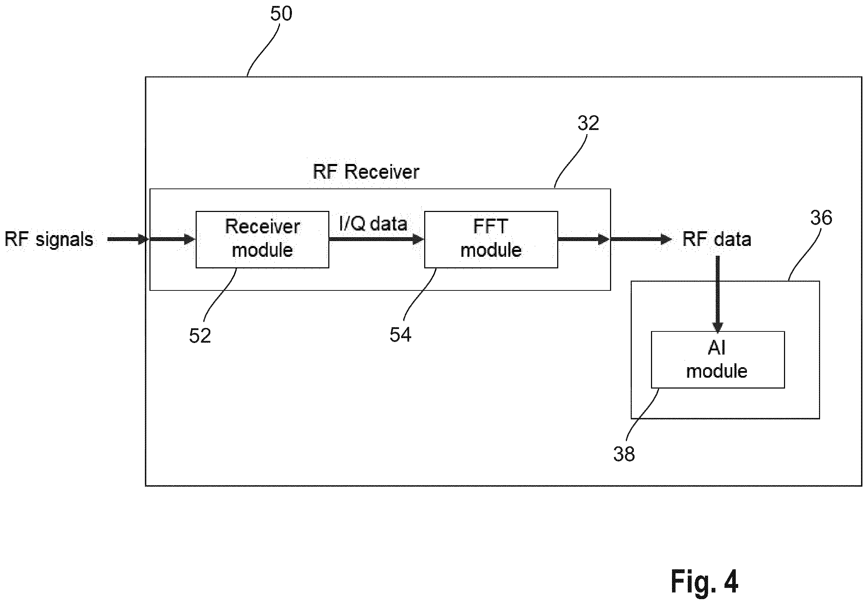

In Figure 4, a receiver device 50 is shown that commonly houses the receiver 32 and the evaluation unit 36 with the artificial intelligence module 38.

As shown in Figure 4, the receiver device 50, particularly the receiver 32, receives the at least one RF signal. The RF signal is processed by the receiver 32 in order to obtain the I/Q data, particularly by means of a receiver module 52 configured to provide the I/Q data while processing the at least one RF signal.

The I/Q data is internally processed by the receiver 32 in order to obtain the radio frequency data, e.g. by means of a transform like a (Fast) Fourier transform (FFT) which is performed by an FFT module 54.

Then, the radio frequency data is forwarded from the receiver 32 to the evaluation unit 36 having the trained artificial intelligence module 38. The artificial intelligence module 38 may have been trained previously by means of radio frequency data.

Even though Figure 4 shows that the receiver 32 and the evaluation unit 36 are commonly housed by means of the receiver device 50, both components, namely the receiver 32 and the evaluation unit 36, may also be established in a separate manner.

Figure 3 schematically shows computer-implemented method of training an artificial intelligence module.

In a first training step T1, a training data set is provided which encompasses training data of a frequency spectrum comprising a guard band 30 and/or training data concerning a radio frequency (RF) power in the guard band 30.

The training data may be indicative of the standard frequency spectrum and/or the standard radio frequency power in the guard band 30. Hence, an artificial intelligence module to be trained obtains information concerning the standard frequency spectrum and/or the standard radio frequency power in the guard band 30. Accordingly, the artificial intelligence module to be trained learns the characteristics of the radio frequency spectrum without any anomalies or rather disturbances. Alternatively or additionally, the artificial intelligence module to be trained learns the characteristics of the radio frequency power in the guard band 30 without any anomalies or rather disturbances.

Besides this training data, the training data set may also comprise anomaly data indicative of a spill over or leakage into the guard band 30 and/or unwanted radio frequency signals in the guard band 30. The anomaly data causes deviations from the standard frequency spectrum and/or the standard radio frequency power in the guard band 30. Hence, the anomaly data is used to learn the artificial intelligence module 38 to distinguish between data (values) associated with anomalies and data (values) associated with the normal radio frequency spectrum or rather the normal radio frequency power in the guard band 30.

Generally, the data of the training data set may be generated in a computer-aided manner. Alternatively or additionally, the data is collected by means of a radio receiver.

In a second training step T2, the training data set is fed into the artificial intelligence module to be trained, e.g. the artificial intelligence module 38 of the evaluation module 36 prior to its usage shown in Figure 1.

In a third training step T3, the artificial intelligence module to be trained processed the training data set, namely the training data and the anomaly data.

In a fourth training step T4, the artificial intelligence module to be trained outputs a prediction result that corresponds to an output of the artificial intelligence module to be trained, which indicates whether a deviation occurs/arises or not based on its state of training. Then, the prediction result obtained by the artificial intelligence module is manually and/or automatically verified/assessed in order to determine a divergence between the prediction result and the real data. For instance, labelled data may be used during the training phase, thereby ensuring an automatic machine learning procedure.

In a fifth training step T5, the assessment obtained when assessing/verifying the prediction result is fed back into the artificial intelligence module to be trained which receives this information as (additional) input.

Depending on the assessment, the artificial intelligence module to be trained adapts its settings, particularly weightings and/or model parameters, thereby learning relations and/or correlations during the training phase such that the artificial intelligence module gets trained.

During the training, the artificial intelligence module to be trained extracts at least one fingerprint data encompassed in the training data set, wherein the at least one fingerprint data is used for determining the deviation from the standard frequency spectrum and/or determining the deviation from the standard radio frequency power in the guard band 30.

In other words, the artificial intelligence module to be trained may select a certain parameter from the overall data received, which corresponds to the fingerprint data as being indicative for an occurring/arising deviation that shall be predicted by the artificial intelligence module. Hence, the artificial intelligence module is also trained to identify which of the several data encompassed in the training data set can be relied on for evaluating whether a deviation occurs/arises.

Certain embodiments disclosed herein, particularly the respective module(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1. A computer-implemented method of training an artificial intelligence module, the method comprising the steps of
- providing a training data set, the training data set encompassing training data of a frequency spectrum comprising a guard band and/or training data concerning a radio frequency power in the guard band, and
- feeding the training data set into the artificial intelligence module to be trained, which processes the training data set in order to learn a standard frequency spectrum and/or a standard radio frequency power in the guard band, thereby enabling the artificial intelligence module, when trained, to determine a deviation from the standard frequency spectrum and/or to determine a deviation from the standard radio frequency power in the guard band.

2. The method according to claim 1, wherein the training data is indicative of the standard frequency spectrum and/or the standard radio frequency power in the guard band.

3. The method according to claim 1 or 2, wherein the training data set comprises anomaly data indicative of a spill over or leakage into the guard band and/or unwanted radio frequency signals in the guard band, based on which the artificial intelligence module is trained to identify a deviation from the standard frequency spectrum and/or the standard radio frequency power in the guard band.

4. The method according to any of the preceding claims, wherein the artificial intelligence module processes the training data set, thereby extracting at least one fingerprint data encompassed in the training data set, wherein the at least one fingerprint data is used for determining the deviation from the standard frequency spectrum and/or determining the deviation from the standard radio frequency power in the guard band.

5. The method according to any of the preceding claims, wherein the training data is generated in a computer-aided manner and/or wherein the training data is collected by means of a radio receiver.

6. A monitoring method for identifying an anomaly in a radio frequency spectrum, the monitoring method comprises the steps of:
- receiving at least one radio frequency signal by at least one receiver that processes the at least one radio frequency signal, thereby providing radio frequency data,
- feeding the radio frequency data to at least one evaluation unit comprising a trained artificial intelligence module, particularly trained by a method according to any of the preceding claims,
- analyzing the radio frequency data by the trained artificial intelligence module in order to identify a deviation from the standard frequency spectrum and/or a deviation from the standard radio frequency power in the guard band.

7. The monitoring method according to claim 6, wherein the trained artificial intelligence module processes the radio frequency data, thereby extracting at least one fingerprint data being encompassed in the radio frequency data, wherein the at least one fingerprint data extracted is used for determining the deviation from the standard frequency spectrum and/or determining the deviation from the standard radio frequency power in the guard band, in particular wherein the trained artificial intelligence module compares the at least one fingerprint data extracted with corresponding fingerprint data trained.

8. The monitoring method according to claim 6 or 7, wherein a notification is outputted in case the trained artificial intelligence module identifies a respective deviation from the standard frequency spectrum and/or the standard radio frequency power in the guard band.

9. The monitoring method according to any of claims 6 to 8, wherein a direction finding takes place, thereby identifying the direction of a source of the at least one radio frequency signal received.

10. The monitoring method according to any of claims 6 to 9, wherein at least one environmental parameter is additionally captured by means of a sensor unit, wherein the environmental parameter is also taken into account by the evaluation unit when analyzing the radio frequency data.

11. A system for monitoring a radio frequency environment, the system comprising:
- at least one receiver configured to receive at least one radio frequency signal, wherein the at least one receiver is configured to process the at least one radio frequency signal, thereby obtaining radio frequency data,
- at least one evaluation unit comprising a trained artificial intelligence module, wherein the at least one evaluation unit is configured to evaluate the radio frequency data,
- wherein the trained artificial intelligence is configured and trained to identify a deviation from a standard frequency spectrum and/or a deviation from a standard radio frequency power in the guard band.

12. The system according to claim 11, **characterized in that** the at least one receiver is configured to process the at least one radio frequency signal received, thereby obtaining in-phase and quadrature (I/Q) data, in particular wherein the in-phase and quadrature (I/Q) data is further processed, for instance by means of a Fourier transform, in order to obtain the radio frequency data that is forwarded to the evaluation unit.

13. The system according to claim 11 or 12, **characterized in that** a storage medium is provided that is configured to store the radio frequency data.

14. The system according to any of claims 11 to 13, **characterized in that** the system comprises at least one amplifier configured to amplify the at least one radio frequency signal received and/or at least one signal classification unit configured to identify a signal baseline and/or an interfering signal.

15. The system according to any of claims 11 to 14, **characterized in that** a sensor unit is provided that is configured to additionally capture at least one environmental parameter, wherein the sensor unit is connected with the at least one evaluation unit such that the at least one evaluation unit is configured to take the environmental parameter also into account when analyzing the radio frequency data.
